# FASCICULE DE BREVET EUROPEEN

(11) **EP 3 802 159 B1**
(45) Date de publication et mention de la délivrance du brevet: **06.07.2022**
(21) Numéro de dépôt: 19737175.0
(22) Date de dépôt: 29.05.2019
(51) Int. Cl.: B60C 13/00, B29D 30/72

(54) **PNEUMATIQUE POURVU D'UN MARQUAGE COLORÉ ET D'UNE TEXTURE SUR UN FLANC**
REIFEN MIT FARBIGER MARKIERUNG UND EINER TEXTUR AUF EINER FLANKE
TYRE PROVIDED WITH COLOURED MARKING AND A TEXTURE ON A FLANK

(30) Priorité: 31.05.2018 FR 1854718
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: MUHLHOFF, Olivier, 63040 CLERMONT-FERRAND CEDEX 09 (FR)
(74) Mandataire: Millanvois, Patrick Jacques Jean
(86) Numéro de dépôt international: PCT/FR2019/051274
(87) Numéro de publication internationale: WO 2019/229387

(56) Documents cités:
- EP-A1- 0 650 824
- FR-A1- 3 014 023
- US-B1- 6 391 134

## Description

La présente invention concerne les domaines des pneumatiques pour véhicules.

Plus particulièrement, l'invention concerne un pneumatique présentant, sur au moins un de ses flancs, au moins un marquage au moins en partie coloré et au moins une texture associée à ce marquage pour procurer un aspect amélioré.

Un pneumatique présente une grande quantité de marquages destinés à donner des informations techniques, légales ou à permettre aux consommateurs de distinguer la marque du produit, ou encore à donner des informations pour identification de stock, d'un numéro de série individuel, etc.

Par ailleurs, les marquages peuvent être aussi utilisés pour donner un aspect original au pneumatique, ou encore pour masquer des déformations locales générées lors de la fabrication du pneumatique et pouvant être visibles au niveau des flancs, notamment sous certaines conditions d'éclairage.

De tels marquages peuvent par exemple être colorés et apposés sur le flanc du pneumatique. Il est notamment possible de réaliser ces marquages colorés par apposition d'autocollants ou "stickers". Il est aussi possible d'obtenir de tels marquages colorés par impression par jet d'encre ou encore par dépose d'une couche de peinture après vulcanisation du pneumatique. Pour plus de détail, on pourra par exemple se référer au brevet US 5, 015, 505 qui traite d'une telle dépose de couche de peinture sur le flanc du pneumatique. Il est aussi envisageable de prévoir des flancs de pneumatique colorés dans la masse. D'autres marquages colorés sont connus des documents US 6 391 134 B1 et EP 0 650 824 A1.

Dans le cas de marquages prévus de manière localisée sur le flanc d'un pneumatique, il peut se poser des problèmes de visibilité, notamment pour les marquages de petites tailles.

La présente invention vise à remédier à cet inconvénient.

Plus particulièrement, la présente invention vise à améliorer la visibilité des marquages colorés prévus sur les flancs des pneumatiques, notamment des marquages colorés de petites tailles.

L'invention concerne un pneumatique en matériau caoutchoutique comprenant une bande de roulement et deux flancs délimitant ladite bande de roulement.

Selon une caractéristique générale de l'invention, au moins un des flancs comprend au moins un marquage au moins en partie coloré. Ledit flanc comprend en outre au moins une texture venue de matière avec ledit flanc et faisant contraste avec ledit marquage et avec le reste dudit flanc non texturé et non marqué. Ledit marquage est adjacent à ladite texture.

Par « pneumatique », on entend tous les types de bandages élastiques soumis à une pression interne ou non.

On entend par « matériau caoutchoutique », un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement du pneumatique et un bourrelet de ce pneumatique, débutant à partir des extrémités des découpures de la bande de roulement et se prolongeant jusqu'au bourrelet.

Par « marquage au moins en partie coloré », on entend tout élément ou revêtement au moins en partie coloré qui est prévu sur le flanc du pneumatique. Le terme « coloré » est entendu ici comme excluant la couleur noire, c'est-à-dire toutes les couleurs y compris le blanc. Autrement dit, le marquage présente au moins une couleur qui est différente de la couleur noire du matériau caoutchoutique du pneumatique.

Selon une première conception, le marquage peut être apposé sur le flanc du pneumatique, avant ou après sa vulcanisation. Dans ce cas, le marquage est donc rapporté sur le flanc du pneumatique. De préférence, le marquage peut être réalisé par impression couleur sur le flanc, notamment par impression par jet d'encre. En variante, le marquage peut être un sticker ou encore une couche de vernis, une couche de peinture. Alternativement, le marquage peut encore être réalisé par transfert à froid ou à chaud d'un film de couleur.

Selon une deuxième conception, le marquage peut être intégré au flanc du pneumatique. Par exemple, le marquage peut être obtenu par une coloration locale dans la masse du matériau caoutchoutique du pneumatique. Alternativement, le marquage peut être obtenu au moyen d'un laser agissant sur le matériau caoutchoutique du pneumatique auquel est incorporé au moins un adjuvant photosensible dont la couleur est révélée après exposition au laser.

On entend par « texture » sur un flanc, une partie de flanc qui présente des caractéristiques d'état de surface différentes du reste du flanc et différentes dudit marquage.

Par « texture venue de matière avec le flanc », on entend que la texture est dans le même matériau caoutchoutique que le flanc.

Par « marquage adjacent à ladite texture », on entend un marquage qui est disposé à proximité immédiate de cette texture ou un marquage qui touche au moins en partie ladite texture.

Par « marquage disposé à proximité immédiate de ladite texture», on entend un marquage espacé de la texture d'une distance inférieure ou égale à 6 cm, et de préférence inférieure ou égale à 1 cm.

Le marquage combiné à la présence de la texture crée sur le flanc du pneumatique un effet de contraste qui rend davantage visible ce marquage coloré. Plus la texture est proche du marquage plus l'effet de contraste rendant davantage visible ce marquage est accentué.

La luminosité de ladite texture est inférieure ou égale à 15 et supérieure ou égale à 5. Avec une telle caractérisation de la luminosité, on obtient une texture d'aspect noir qui permet de bien faire ressortir le marquage coloré.

Avantageusement, la luminosité dudit marquage est supérieure à la luminosité de ladite texture d'au moins 15 unités de luminosité.

Un tel écart de luminosité permet de maximiser l'effet de contraste entre la texture et le marquage. La visibilité du marquage coloré est encore accrue.

Par « luminosité » ou « luminance », on entend le paramètre qui caractérise une surface à réfléchir plus ou moins la lumière. La luminosité est exprimée selon une échelle allant de 0 à 100 selon le modèle colorimétrique L^{∗}a^{∗}b^{∗} établi par la CIE (Commission Internationale de l'Eclairage). La valeur 100 représente le blanc ou la réflexion totale ; la valeur 0, le noir ou l'absorption totale. Dans ce modèle colorimétrique a^{∗} et b^{∗} sont des coordonnées de chromaticité. Le modèle colorimétrique L^{∗}a^{∗}b^{∗} définit également un diagramme de chromaticité. Dans ce diagramme, a^{∗} et b^{∗} indiquent la direction des couleurs +a^{∗} va vers le rouge, -a^{∗} vers le vert, +b^{∗} vers le jaune et -b^{∗} vers le bleu. Le centre du diagramme est achromatique. Au fur et à mesure que les valeurs a^{∗} et b^{∗} augmentent et que l'on s'éloigne donc du centre du diagramme, la saturation augmente.

La luminosité dudit marquage peut avantageusement être supérieure ou égale à 30, et de préférence supérieure ou égale à 40.

Dans un mode de réalisation, la luminosité dudit reste dudit flanc non texturé et non marqué est supérieure à la luminosité de ladite texture, de préférence d'au moins 5 unités de luminosité. La luminosité dudit reste dudit flanc non texturé et non marqué est préférentiellement inférieure à la luminosité dudit marquage. A titre indicatif, cette luminosité dudit reste dudit flanc non texturé et non marqué peut être supérieure ou égale à 15, et inférieure ou égale à 35.

Dans un mode de réalisation particulier, ladite texture peut entourer tout ou partie dudit marquage. Alternativement, ledit marquage peut entourer tout ou partie de ladite texture.

Dans le mode de réalisation particulier dans lequel ledit marquage est réalisé par impression couleur par jet d'encre, ou encore par dépose de vernis ou de peinture, la distance entre ledit marquage et ladite texture est de préférence supérieure ou égale à 2 mm. On limite ainsi après application le risque de débordement de la ou des couleurs du marquage sur la texture. Alternativement, le marquage et la texture peuvent se toucher et comprendre au moins un bord commun, et ce, quel que soit le procédé d'obtention du marquage.

Dans une variante de réalisation, la surface du flanc sur laquelle est réalisé ledit marquage peut présenter une rugosité de surface de paramètre Rₐ inférieure ou égale à 30 µm. Ainsi, cette surface du flanc à colorer est dépourvue de texture, i.e. est globalement lisse. Cela permet de favoriser l'obtention d'un marquage de bonne qualité. Dans ce but, la rugosité de surface de paramètre Rₐ est de préférence inférieure ou égale à 15 µm, et notamment inférieure ou égale à 5 µm.

Dans un mode de réalisation particulier, la surface dudit marquage peut être supérieure à la surface de ladite texture. La surface dudit marquage peut être au moins égale à 6 cm². Ledit marquage peut comprendre une unique zone au moins en partie colorée ou être constituée de plusieurs zones au moins en partie colorées et espacées les unes par rapport aux autres. Dans une variante de réalisation, ledit marquage forme globalement une surface annulaire sur ledit flanc du pneumatique. De sorte à être particulièrement visible, ledit marquage et la texture peuvent être situés sensiblement au niveau de l'équateur du flanc du pneumatique, c'est-à-dire à l'endroit où il est le plus large.

Ledit marquage peut comprendre des lettres, et/ou des signes, et/ou des chiffres pour indiquer des informations techniques du pneumatique. Ledit marquage peut également comprendre des informations légales ou distinctives de la marque du pneumatique ou encore des codes à barres pour identification de stock, un numéro de série individuel dudit pneumatique, etc. Dans de tels modes de réalisation, le contour des lettres, des signes et des chiffres dudit marquage peut être délimité par ladite texture.

Concernant ladite texture, celle-ci peut comprendre une pluralité d'éléments en protubérance et/ou en creux par rapport à une surface dudit flanc. Cela permet d'obtenir, de manière simple et pratique, une texture de type "velours" que ce soit au niveau visuel ou au niveau du toucher.

La surface de ladite texture peut être au moins égale à 6 cm². Ladite texture peut comprendre une unique zone texturée. Alternativement, ladite texture peut être divisée en une pluralité de motifs espacés, chaque motif comprenant une pluralité d'éléments en protubérance et/ou en creux, des zones intermédiaires dudit flanc dépourvues de texture séparant lesdits motifs.

Par « motif », on entend une zone de la texture comprenant un agencement organisé des protubérances et/ou des creux.

Dans une variante de réalisation, ladite texture forme globalement une surface annulaire sur ledit flanc du pneumatique. Ladite texture peut comprendre des lettres, et/ou des signes, et/ou des chiffres pour indiquer des informations techniques du pneumatique. Ladite texture peut également comprendre des informations légales ou distinctives de la marque du pneumatique ou encore des codes à barres pour identification de stock, un numéro de série individuel dudit pneumatique, etc. Dans de tels modes de réalisation, le contour des lettres, des signes et des chiffres de ladite texture peut être délimité par ledit marquage.

Afin de limiter les coûts de fabrication du pneumatique, ledit marquage et ladite texture sont de préférence prévus uniquement sur le flanc extérieur du pneumatique, i.e. le flanc destiné à être positionné du côté extérieur du véhicule. Dans ce but, la bande de roulement du pneumatique est non directionnelle. Par « bande de roulement directionnelle », on entend une bande dont les caractéristiques comportementales sont optimisées selon un sens de rotation prédéterminé.

Dans un mode de réalisation particulier, ledit marquage et ladite texture peuvent être disposés sur la surface latérale dudit flanc du pneumatique. Alternativement, ledit marquage et ladite texture peuvent être disposés à l'intérieur d'un logement en creux formé sur cette surface latérale dudit flanc.

L'invention concerne également un procédé de marquage d'un pneumatique du type comprenant une bande de roulement et deux flancs délimitant ladite bande de roulement, au moins un des flancs comprenant au moins une texture venue de matière avec ledit flanc et faisant contraste avec le reste dudit flanc non texturé.

Le procédé comprend une étape de réalisation, par impression couleur à l'aide d'au moins une tête d'impression, d'au moins un marquage au moins en partie coloré sur ledit flanc de manière adjacente à ladite texture. Cette étape de réalisation dudit marquage est effectuée après une étape de vulcanisation dudit pneumatique.

De préférence, ladite texture du flanc est obtenue lors de l'étape de vulcanisation dudit pneumatique dans le moule. On évite ainsi de devoir réaliser, après la cuisson du pneumatique, une étape supplémentaire pour rendre particulièrement visible le marquage. Alternativement, il reste cependant possible de réaliser cette texture, après l'étape de vulcanisation, par usinage ou gravure au laser ou encore par moletage.

Dans un mode de mise en œuvre particulier, le procédé peut comprendre en outre, avant l'étape de réalisation dudit marquage, une étape de détermination de la position de ladite texture sur ledit flanc par mesure de la luminosité de ladite texture et dudit reste dudit flanc non texturé, et une étape de positionnement de ladite tête d'impression par rapport audit flanc en fonction de ladite position déterminée de ladite texture.

Ainsi, ladite texture est utilisée pour assurer le positionnement de la ou des têtes d'impression à la position souhaitée relativement à ladite texture. La détermination de la position de ladite texture sur ledit flanc peut par exemple être réalisée à l'aide d'un spectro-colorimètre.

L'invention concerne encore un procédé de marquage d'un pneumatique du type comprenant une bande de roulement et deux flancs délimitant ladite bande de roulement.

Ledit procédé comprend une étape de réalisation, par impression couleur à l'aide d'au moins une tête d'impression, d'au moins un marquage au moins en partie coloré sur au moins l'un des flancs. Ce procédé comprend en outre une étape de réalisation d'au moins une texture sur ledit flanc de manière adjacente audit marquage. Lesdites étapes de réalisation dudit marquage et de ladite texture sont effectuées après vulcanisation dudit pneumatique.

Dans un mode de mise en œuvre particulier, ladite texture est réalisée par gravure au laser.

Ledit procédé peut comprendre en outre, avant l'étape de réalisation de ladite texture, une étape de détermination de la position dudit marquage sur ledit flanc par mesure de la luminosité dudit marquage et dudit reste dudit flanc non marqué, et une étape de positionnement du laser par rapport audit flanc en fonction de ladite position déterminée dudit marquage.

Ainsi, ledit marquage est utilisé pour assurer le positionnement du ou des lasers à la position souhaitée relativement audit marquage. La détermination de la position dudit marquage sur ledit flanc peut par exemple être réalisée à l'aide d'un spectro-colorimètre.

La présente invention sera mieux comprise à la lecture de la description détaillée de modes de réalisation pris à titre d'exemples nullement limitatifs et illustrés par les dessins annexés sur lesquels :
- la figure 1 est une vue partielle de côté d'un pneumatique qui comprend un marquage et une texture prévus sur un flanc du pneumatique selon un exemple de réalisation de l'invention,
- la figure 2 est une vue schématique en perspective représentant une partie de la texture du flanc du pneumatique de la figure 1,
- les figures 3 à 5 sont des vues schématiques en perspective représentant une partie de la texture du flanc du pneumatique selon d'autres exemples de réalisation, et
- la figure 6 est un organigramme d'un procédé de marquage pour obtenir le pneumatique des exemples de réalisation précédents.

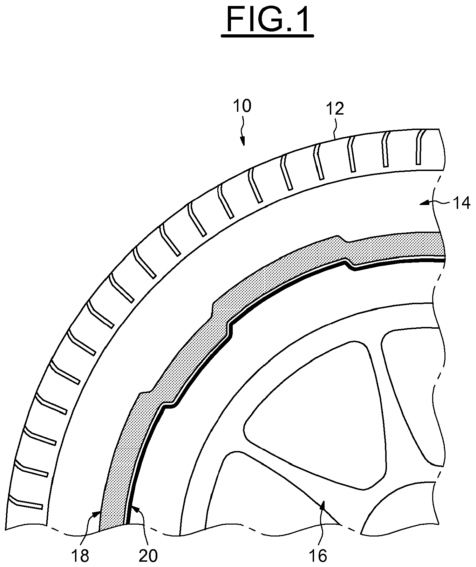

Sur la figure 1 est représenté schématiquement un pneumatique 10 comprenant une bande de roulement 12 et des flancs 14 latéraux entourant de part et d'autre la bande de roulement, un seul étant visible sur la figure. La bande de roulement 12 comprend une surface de roulement destinée à venir en contact avec une chaussée lors du roulage. Le pneumatique 10 est monté sur une jante 16, qui est de préférence la jante définitive destinée à être montée sur le véhicule.

Le flanc 14 comprend un marquage 18 coloré et une texture 20 associée au marquage. La texture 20 est distincte du marquage 18. Sur la figure 1, le marquage 18 a été représenté en couleur grise et la texture 20 en noire.

Comme cela sera décrit plus en détail par la suite, la texture 20 fait contraste par rapport au marquage 18 et au reste du flanc 14 qui est non marqué et non texturé. Le marquage 18 est agencé de manière adjacente à la texture 20 de sorte à accentuer l'effet de contraste et rend encore davantage visible le marquage 18. La distance entre le marquage 18 et la texture 20 est inférieure ou égale à 6 cm, et de préférence inférieure ou égale à 1 cm. Plus la texture 20 est proche du marquage 18, plus l'effet de contraste permettant de rendre visible et de mettre en valeur le marquage 18 est accentué.

Dans l'exemple de réalisation illustré, le marquage 18 et la texture 20 forment chacun, sur le flanc 14 du pneumatique, une surface globalement annulaire en forme d'anneau continu centré sur l'axe de rotation du pneumatique. La texture 20 est située sur le flanc 14 radialement du côté intérieur par rapport au marquage 18. Par radial, on entend une direction perpendiculaire à l'axe de rotation du pneumatique 10. Alternativement, il est possible de prévoir une disposition alternée avec un marquage 18 situé sur le flanc 14 radialement du côté intérieur par rapport à la texture 20.

Le marquage 18 peut avantageusement être réalisé sur le flanc 14 après vulcanisation du pneumatique par impression couleur à l'aide d'une ou plusieurs têtes d'impression comme cela sera décrit plus en détail par la suite. En variante, il est possible de réaliser le marquage 18 coloré différemment, par exemple par dépose de peinture, de vernis, par transfert à froid ou à chaud ou encore par collage d'un sticker.

Le marquage 18 présente au moins une couleur qui est différente de la couleur noire du matériau caoutchoutique du pneumatique. Le marquage 18 peut présenter plusieurs couleurs.

Le marquage 18 présente une luminosité dite première luminosité L^{∗}1 et la texture 20 présente une luminosité dite deuxième luminosité L^{∗}2 qui est inférieure à la luminosité L^{∗}1. De préférence, la luminosité L^{∗}1 du marquage est supérieure à la luminosité L^{∗}2 de la texture d'au moins 15 unités de luminosité. La luminosité L^{∗}1 est par exemple supérieure ou égale à 30, et de préférence supérieure ou égale à 40. La luminosité L^{∗}2 est par exemple inférieure ou égale à 15 et supérieure ou égale à 5.

Le reste du flanc 14 non marqué et non texturé présente une luminosité dite troisième luminosité L^{∗}3 supérieure d'au moins 5 unités de luminosité à la luminosité L^{∗}2 de la texture 20. La luminosité L^{∗}3 dudit reste dudit flanc non texturé et non marqué est par exemple supérieure ou égale à 15, et inférieure ou égale à 35.

L'appareil de mesure de la luminosité approprié est un spectro-colorimètre CM 700D de la marque KONICA-MINOLTA. Cet appareil est adapté pour mesurer :
- la luminosité L^{∗}1 à L^{∗}3 du marquage 18, de la texture 20 et du reste du flanc 14,
- une composante a^{∗} qui définit une première nuance de couleur entre le rouge et le vert,
- une composante b^{∗} qui définit une deuxième nuance de couleur entre le jaune et le bleu.

On positionne l'appareil sur la partie du flanc 14 du pneumatique que l'on veut mesurer et qui donne ensuite les valeurs des trois paramètres L^{∗}, a^{∗}, b^{∗}. Ces mesures sont effectuées avec le mode « SCI » (Mode de réflexion spéculaire incluse) paramétré à un angle de 10° et un réglage de la lumière de type D65 (réglage défini selon la Commission Internationale de l'Eclairage, CIE). Grâce à cet appareil, on quantifie la luminosité du marquage 18, de la texture 20 et du reste du flanc 14 non marqué et non texturé.

La texture 20 comporte une pluralité d'éléments en protubérance et/ou en creux par rapport à la surface du flanc 14. La texture 20 est venue de matière avec le flanc 14. La texture 20 est donc dans le même matériau caoutchoutique que le flanc 14. La texture 20 vise à piéger une grande partie des rayons lumineux incidents qui rencontrent ladite texture, c'est-à-dire limiter le nombre de rayons lumineux renvoyés à l'extérieur. Ceci permet de donner un aspect plus noir à la texture par rapport au reste du flanc 14 et du marquage 18 du pneumatique, ce qui faire ressortir le marquage 18.

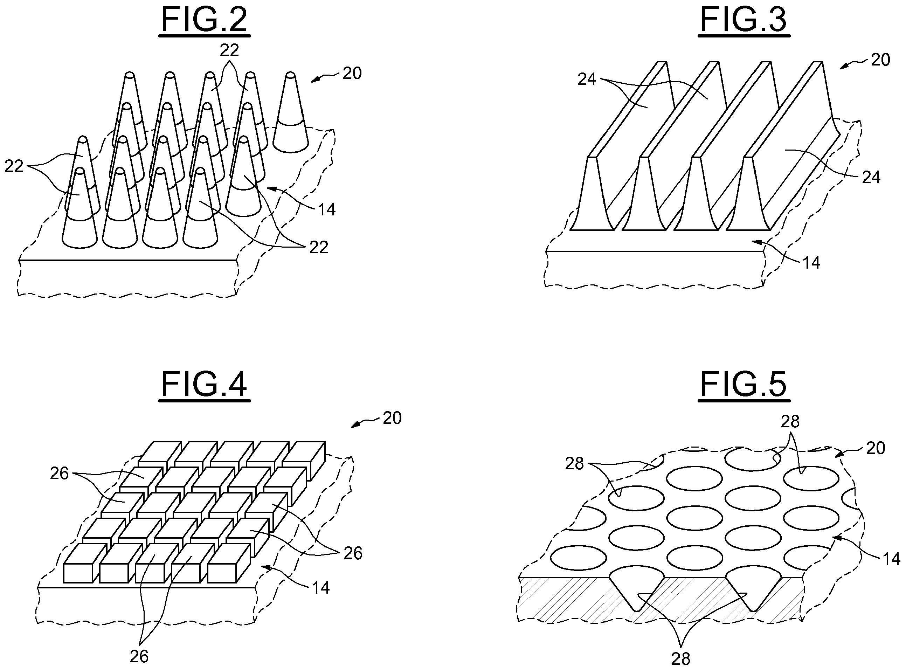

La texture 20 va maintenant être décrite selon différents modes de réalisation non limitatifs. Selon un premier mode de réalisation illustré à la figure 2, la texture 20 comprend une pluralité de brins 22 s'étendant en saillie à partir de la surface du flanc 14. Les brins 22 sont ici régulièrement répartis sous forme de rangées successives. Les brins 22 peuvent par exemple être répartis selon une densité au moins égale à un brin par millimètre carré (mm²), chaque brin 22 ayant une section moyenne S comprise entre 0,0005 mm² et 1 mm². Les brins 22 ont une forme globalement conique avec une section diminuant le long de leur hauteur.

En variante, la texture 20 peut comprendre d'autres types d'éléments en protubérance que les brins 22. Dans un deuxième mode de réalisation illustré à la figure 3, la texture 20 comprend des lamelles 24 en saillie à partir de la surface du flanc 14 qui sont sensiblement parallèles entre elles. Le pas des lamelles 24 dans la texture peut par exemple être compris entre 0,1 mm et 0,5 mm, chaque lamelle 24 ayant une largeur moyenne comprise entre 0,02 mm et 0,25 mm et une hauteur comprise entre 0,05 et 0,5 mm.

Dans un troisième mode de réalisation de la texture illustré à la figure 4, les éléments en protubérance de celle-ci sont réalisés sous la forme de parallélépipèdes 26 dont le côté peut être compris entre 0,05 mm et 0,5 mm et la hauteur peut être comprise entre 0,05 mm et 0,5 mm. La distance séparant deux parallélépipèdes 26 adjacents peut être comprise entre 0,05 mm et 0,5 mm.

Dans les trois modes de réalisation décrits précédemment, les éléments en protubérance de la texture 20 présentent un espacement régulier et des formes identiques. Alternativement, il est possible de prévoir une texture 20 dans laquelle les éléments en protubérance sont répartis dans celle-ci de manière non ordonnée, et/ou présentent des formes variables et/ou des hauteurs variables. La texture 20 peut aussi comporter une combinaison des brins 22, des lamelles 24 et des parallélépipèdes 26.

Dans un autre mode de réalisation illustré à la figure 5, la texture 20 comprend une pluralité de cavités 28 s'étendant en creux à partir de la surface du flanc 14 dans la profondeur dudit flanc. Les cavités 28 sont ici régulièrement réparties sous forme de rangées successives. Les cavités 28 peuvent par exemple être réparties selon une densité au moins égale à une cavité par mm². Les cavités 28 peuvent présenter une profondeur par rapport à la surface du flanc 14 comprise entre 0,05 mm et 0,6 mm, avantageusement entre 0.1 mm et 0.4 mm, et notamment entre 0.2 mm et 0.35 mm. Les cavités 28 présentent ici une profondeur constante. Dans l'exemple de réalisation illustré, les cavités 28 présentent une section qui diminue dans la profondeur du pneumatique. A titre indicatif, la section moyenne de chaque cavité 28 à mi-profondeur est par exemple comprise entre 0,1 et 0,4 fois la section de ladite cavité. Les cavités 28 présentent une forme tronconique. En variante, il est possible de prévoir des cavités 28 présentant des sections constantes. Les cavités 28 peuvent également déboucher sur la surface de la texture 20 en formant d'autres formes que des formes circulaires, par exemple des formes polygonales, en étoile, irrégulières etc.

Dans un autre mode de réalisation de la texture, il est possible de prévoir, en remplacement des cavités 28 ou en association avec celles-ci, d'autres éléments en creux sur la surface du flanc 14, par exemple des stries. En variante, de manière similaire aux modes de réalisation dans lesquels la texture 20 comporte des éléments en protubérance, il est possible de prévoir une texture 20 comprenant des éléments en creux répartis dans celle-ci de manière non ordonnée, et/ou présentant des formes variables et/ou des profondeurs variables.

Comme indiqué précédemment, dans l'exemple de réalisation illustré, la texture 20 se présente sous la forme d'un anneau continu. En variante, il est possible de prévoir d'autres agencements. La texture 20 peut par exemple être discontinue dans le sens circonférentiel. Dans ce cas, la texture 20 peut être composée d'une pluralité de motifs qui sont espacés les uns aux autres sur le flanc dans le sens circonférentiel et/ou dans le sens radial. Les motifs peuvent présenter une forme extérieure identique ou des formes différentes. Les motifs peuvent par exemple présenter des formes carrées, hexagonales, rectangulaires ou encore en parallélogramme.

Comme également indiqué précédemment, le marquage 18 se présente aussi ici sous la forme d'un anneau continu. Alternativement, il est possible de prévoir d'autres formes. Le marquage 18 peut par exemple être composé d'une pluralité de zones colorées qui sont espacées les unes aux autres sur le flanc dans le sens circonférentiel et/ou dans le sens radial.

Dans cette conception particulière dans laquelle le marquage 18 est formé par une pluralité de zones colorées, chacune de ces zones est de préférence adjacente avec la texture, ou avec un des motifs ou une des parties de ladite texture, de sorte à bien faire ressortir les zones colorées du marquage.

Dans l'exemple de réalisation décrit, la texture 20 est décalée radialement par rapport au marquage 18. Il est possible de prévoir d'autres agencements relatifs entre ces moyens. La texture 20 peut par exemple être décalée dans le sens circonférentiel par rapport au marquage 18, entourer la totalité du marquage, etc.

Comme indiqué précédemment, pour réaliser le marquage 18, il est possible de prévoir une impression couleur par jet d'encre sur le flanc 14 du pneumatique. Dans ce cas, il est utilisé une machine de marquage (non représentée) comprenant un moyen de support du pneumatique, un moyen d'entrainement en rotation dudit moyen de support et des têtes d'impression par jet d'encre. Le moyen de support peut être prévu pour permettre le maintien du pneumatique en position verticale ou en position horizontale pendant l'étape d'impression.

La machine de marquage comprend également une unité de commande pour commander le fonctionnement des têtes d'impression qui peut par exemple se présenter sous la forme d'une carte de circuit imprimé. La machine de marquage comprend encore un système de mesure de la luminosité, par exemple un spectro-colorimètre, et un dispositif pour le séchage et le durcissement de la ou des couches d'encre déposées sur le flanc, par exemple une lampe ultraviolet ou une lampe infrarouge ou encore un moyen de soufflage d'air chaud.

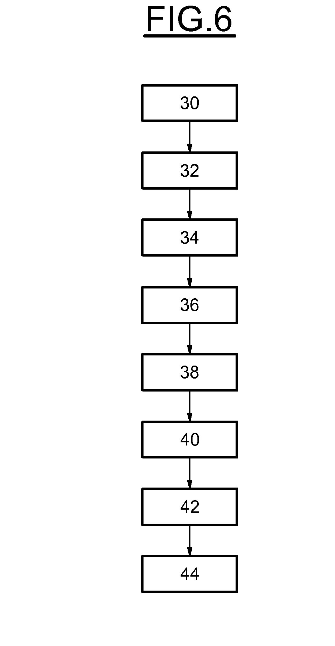

Le marquage du flanc 14 du pneumatique pourvu de la texture 20 peut être obtenu selon le procédé de marquage de la figure 6.

Dans une première étape référencée 30, le pneumatique équipé de sa jante est gonflé, par exemple à la pression de gonflage nominale recommandée ou à une pression inférieure. Ensuite, dans une seconde étape référencée 32, le pneumatique est monté sur la machine de marquage. Lors de cette étape, le système de mesure de la luminosité, les têtes d'impression et le dispositif de séchage et de durcissement sont amenés en regard du flanc à marquer.

Ensuite, lors d'une troisième étape référencée 34, le pneumatique est entrainé en rotation à vitesse constante par l'intermédiaire du moyen d'entrainement de la machine de marquage. Dans une quatrième étape référencée 36, la position de la texture sur le flanc du pneumatique est déterminée en fonction des mesures de la luminosité réalisées par le système de mesure. Pour ce faire, les mesures de la luminosité sont transmises par le système de mesure à l'unité de commande qui comprend tous les moyens matériels et logiciels pour déterminer la position de la texture sur le flanc à partir de ces mesures.

Puis, dans une cinquième étape référencée 38, les têtes d'impression sont positionnées relativement au flanc du pneumatique en fonction de la position déterminée de ladite texture. Cette étape de positionnement des têtes d'impression est contrôlée par l'unité de commande.

Ensuite, lors d'une sixième étape référencée 40, l'impression couleur par les têtes d'impression est commandée pour obtenir le marquage prédéterminé sur le flanc du pneumatique de manière adjacente à la texture. Puis, lors d'une septième étape référencée 42, la mise en marche du dispositif de séchage et de durcissement est commandée pour obtenir le séchage et le durcissement de l'encre déposée sur le flanc. Le pilotage des têtes d'impression et le fonctionnement du dispositif de séchage et de durcissement sont contrôlés par l'unité de commande. Lors des sixième et septième étapes, le pneumatique est toujours entrainé en rotation à vitesse constante.

Enfin, lors d'une huitième et dernière étape référencée 44, la rotation du pneumatique est arrêtée et le pneumatique 10 est démonté de la machine de marquage.

Dans le procédé de marquage précédemment décrit, le marquage est réalisé sur un pneumatique déjà pourvu d'une texture. Dans un autre procédé de marquage, il est aussi possible de réaliser dans un premier temps le marquage du flanc du pneumatique par impression couleur, puis dans un deuxième temps de réaliser la texture sur ledit flanc de manière adjacente au marquage, par exemple par gravure au laser.

Comme indiqué précédemment, il reste bien entendu possible de prévoir d'autres modes d'obtention du marquage sur le flanc du pneumatique.

## Revendications

1. Pneumatique en matériau caoutchoutique comprenant une bande de roulement (12) et deux flancs (14) délimitant ladite bande de roulement, dans lequel au moins un des flancs comprend au moins un marquage (18) au moins en partie coloré, et au moins une texture (20) venue de matière avec ledit flanc et faisant contraste avec ledit marquage et avec le reste dudit flanc non texturé et non marqué, ledit marquage étant adjacent à ladite texture, le pneumatique étant **caractérisé en ce que** la luminosité (L^{∗}2) de ladite texture est inférieure ou égale à 15 et supérieure ou égale à 5, la luminosité étant exprimée selon une échelle allant de 0 à 100 selon le modèle colorimétrique L^{∗}a^{∗}b^{∗} établi par la CIE.

2. Pneumatique selon la revendication 1, dans lequel la luminosité (L^{∗}1) dudit marquage est supérieure à la luminosité (L^{∗}2) de ladite texture d'au moins 15 unités de luminosité.

3. Pneumatique selon la revendication 1 ou 2, dans lequel la luminosité (L^{∗}1) dudit marquage est supérieure ou égale à 30, et de préférence supérieure ou égale à 40.

4. Pneumatique selon l'une quelconque des revendications précédentes, dans lequel la luminosité (L^{∗}3) dudit reste dudit flanc non texturé et non marqué est supérieure à la luminosité (L^{∗}2) de ladite texture, de préférence d'au moins 5 unités de luminosité.

5. Pneumatique selon l'une quelconque des revendications précédentes, dans lequel ladite texture (20) entoure tout ou partie dudit marquage (18), ou inversement.

6. Pneumatique selon l'une quelconque des revendications précédentes, dans lequel la distance entre ledit marquage et ladite texture est inférieure ou égale à 1 cm.

7. Pneumatique selon l'une quelconque des revendications précédentes, dans lequel la distance entre ledit marquage et ladite texture est supérieure ou égale à 2 mm.

8. Pneumatique selon l'une quelconque des revendications précédentes, dans lequel la surface du flanc sur laquelle est réalisé ledit marquage (18) présente une rugosité de surface de paramètre Rₐ inférieure ou égale à 30 µm.

9. Pneumatique selon l'une quelconque des revendications précédentes, dans lequel ledit marquage (18) est apposé sur ledit flanc du pneumatique, notamment par impression couleur.

10. Pneumatique selon l'une quelconque des revendications précédentes, dans lequel la surface dudit marquage (18) est supérieure à la surface de ladite texture (20).

11. Pneumatique selon l'une quelconque des revendications précédentes, dans lequel ledit marquage (18) forme globalement une surface annulaire sur ledit flanc du pneumatique.

12. Pneumatique selon l'une quelconque des revendications précédentes, dans lequel ladite texture (20) comprend une pluralité d'éléments en protubérance et/ou en creux par rapport à une surface dudit flanc.

13. Pneumatique selon la revendication 12, dans lequel ladite texture (20) est divisée en une pluralité de motifs espacés, chaque motif comprenant une pluralité d'éléments en protubérance et/ou en creux, des zones intermédiaires dudit flanc dépourvues de texture séparant lesdits motifs.

14. Procédé de marquage d'un pneumatique du type comprenant une bande de roulement et deux flancs délimitant ladite bande de roulement, au moins un des flancs comprenant au moins une texture venue de matière avec ledit flanc et faisant contraste avec le reste dudit flanc non texturé, le procédé comprenant :
- une étape de réalisation, par impression couleur à l'aide d'au moins une tête d'impression, d'au moins un marquage au moins en partie coloré sur ledit flanc de manière adjacente à ladite texture,
- ladite étape de réalisation dudit marquage étant effectuée après vulcanisation dudit pneumatique.

15. Procédé selon la revendication 14, comprenant, avant l'étape de réalisation dudit marquage :
- une étape de détermination de la position de ladite texture sur ledit flanc par mesure de la luminosité de ladite texture et dudit reste dudit flanc non texturé, et
- une étape de positionnement de ladite tête d'impression par rapport audit flanc en fonction de ladite position déterminée de ladite texture.

16. Procédé de marquage d'un pneumatique du type comprenant une bande de roulement et deux flancs délimitant ladite bande de roulement, le procédé comprenant :
- une étape de réalisation, par impression couleur à l'aide d'au moins une tête d'impression, d'au moins un marquage au moins en partie coloré sur au moins l'un des flancs, et
- une étape de réalisation d'au moins une texture sur ledit flanc de manière adjacente audit marquage,
- lesdites étapes de réalisation dudit marquage et de ladite texture étant effectuées après vulcanisation dudit pneumatique.

17. Procédé selon la revendication 16, dans lequel ladite texture est réalisée par gravure au laser.

## Patentansprüche

1. Reifen aus Gummimaterial umfassend einen Laufstreifen (12) und zwei Flanken (14), die den Laufstreifen begrenzen, wobei wenigstens eine der Flanken wenigstens eine wenigstens teilweise farbige Markierung (18) und wenigstens eine Textur (20) umfasst, die mit der Flanke einstückig ausgebildet ist und mit der Markierung und dem nicht texturierten und nicht markierten Rest der Flanke einen Kontrast bildet, wobei die Markierung an die Textur angrenzt, wobei der Reifen **dadurch gekennzeichnet ist, dass** die Helligkeit (L*2) der Textur kleiner als oder gleich 15 und größer als oder gleich 5 ist, wobei die Helligkeit gemäß einer Skala von 0 bis 100 gemäß dem kolorimetrischen Modell L^{∗}a^{∗}b^{∗} der CIE ausgedrückt wird.

2. Reifen nach Anspruch 1, wobei die Helligkeit (L*1) der Markierung um wenigstens 15 Helligkeitseinheiten höher als die Helligkeit (L*2) der Textur ist.

3. Reifen nach Anspruch 1 oder 2, wobei die Helligkeit (L*1) der Markierung größer als oder gleich 30 und vorzugsweise größer als oder gleich 40 ist.

4. Reifen nach einem der vorhergehenden Ansprüche, wobei die Helligkeit (L*3) des nicht texturierten und nicht markierten Rests der Flanke höher als die Helligkeit (L*2) der Textur ist, vorzugsweise um wenigstens 5 Helligkeitseinheiten.

5. Reifen nach einem der vorhergehenden Ansprüche, wobei die Textur (20) die gesamte oder einen Abschnitt der Markierung (18) umgibt oder umgekehrt.

6. Reifen nach einem der vorhergehenden Ansprüche, wobei der Abstand zwischen der Markierung und der Textur kleiner als oder gleich 1 cm ist.

7. Reifen nach einem der vorhergehenden Ansprüche, wobei der Abstand zwischen der Markierung und der Textur größer als oder gleich 2 mm ist.

8. Reifen nach einem der vorhergehenden Ansprüche, wobei die Oberfläche der Flanke, auf der die Markierung (18) ausgebildet ist, eine Oberflächenrauheit mit dem Parameter Rₐ kleiner als oder gleich 30 µm aufweist.

9. Reifen nach einem der vorhergehenden Ansprüche, wobei die Markierung (18) auf der Flanke des Reifens aufgebracht ist, insbesondere durch Farbdruck.

10. Reifen nach einem der vorhergehenden Ansprüche, wobei die Fläche der Markierung (18) größer als die Fläche der Textur (20) ist.

11. Reifen nach einem der vorhergehenden Ansprüche, wobei die Markierung (18) insgesamt eine ringförmige Fläche auf der Flanke des Reifens bildet.

12. Reifen nach einem der vorhergehenden Ansprüche, wobei die Textur (20) eine Mehrzahl von Elementen umfasst, die im Verhältnis zu einer Oberfläche der Flanke hervorstehen und/oder vertieft sind.

13. Reifen nach Anspruch 12, wobei die Textur (20) in eine Mehrzahl von beabstandeten Mustern aufgeteilt ist, wobei jedes Muster eine Mehrzahl von hervorstehenden und/oder vertieften Elementen umfasst, wobei Zwischenzonen der Flanke ohne Textur die Muster trennen.

14. Verfahren zur Markierung eines Reifens vom Typ, der einen Laufstreifen und zwei Flanken umfasst, die den Laufstreifen begrenzen, wobei wenigstens eine der Flanken wenigstens eine Textur umfasst, die mit der Flanke einstückig ausgebildet ist und mit dem nicht texturierten Rest der Flanke einen Kontrast bildet, das Verfahren umfassend:
- einen Schritt des Bildens, durch Farbdruck mithilfe wenigstens eines Druckkopfes, wenigstens einer wenigstens teilweise farbigen Markierung auf der Flanke angrenzend an die Textur,
- wobei der Schritt des Bildens der Markierung nach Vulkanisation des Reifens durchgeführt wird.

15. Verfahren nach Anspruch 14, umfassend, vor dem Schritt des Bildens der Markierung:
- einen Schritt des Bestimmens der Position der Textur auf der Flanke durch Messung der Helligkeit der Textur und des nicht texturierten Rests der Flanke, und
- einen Schritt des Positionierens des Druckkopfes im Verhältnis zur Flanke je nach der bestimmten Position der Textur.

16. Verfahren zur Markierung eines Reifens vom Typ, der einen Laufstreifen und zwei Flanken umfasst, die den Laufstreifen begrenzen, das Verfahren umfassend:
- einen Schritt des Bildens, durch Farbdruck mithilfe wenigstens eines Druckkopfes, wenigstens einer wenigstens teilweise farbigen Markierung auf wenigstens einer der Flanken, und
- einen Schritt des Bildens wenigstens einer Textur auf der Flanke angrenzend an die Markierung,
- wobei die Schritte des Bildens der Markierung und der Textur nach Vulkanisation des Reifens durchgeführt werden.

17. Verfahren nach Anspruch 16, wobei die Textur durch Lasergravur gebildet wird.

## Claims

1. Tyre made of rubbery material comprising a tread (12) and two side walls (14) delimiting said tread, wherein at least one of the side walls comprises at least one marking (18) at least partly coloured, and at least one texture (20) made of a piece with said side wall and forming a contrast with said marking and with the rest of said side wall that is not textured and not marked, said marking being adjacent to said texture, the tyre being **characterized in that** the brightness (L^{∗}2) of said texture is less than or equal to 15 and greater than or equal to 5, the brightness being expressed according to a scale ranging from 0 to 100 on the basis of the L^{∗}a^{∗}b^{∗} colorimetric model established by the CIE .

2. Tyre according to Claim 1, wherein the brightness (L^{∗}1) of said marking is greater than the brightness (L^{∗}2) of said texture by at least 15 brightness units.

3. Tyre according to Claim 1 or 2, wherein the brightness (L^{∗}1) of said marking is greater than or equal to 30, and preferably greater than or equal to 40.

4. Tyre according to any one of the preceding claims, wherein the brightness (L^{∗}3) of said rest of said side wall that is not textured and not marked is greater than the brightness (L^{∗}2) of said texture, preferably by at least 5 brightness units.

5. Tyre according to any one the preceding claims, wherein said texture (20) surrounds all or part of said marking (18), or vice versa.

6. Tyre according to any one of the preceding claims, wherein the distance between said marking and said texture is less than or equal to 1 cm.

7. Tyre according to any one of the preceding claims, wherein the distance between said marking and said texture is greater than or equal to 2 mm.

8. Tyre according to any one of the preceding claims, wherein the surface of the side wall on which said marking (18) is produced has a surface roughness of parameter Rₐ less than or equal to 30 µm.

9. Tyre according to any one of the preceding claims, wherein said marking (18) is applied to said side wall of the tyre, notably by colour printing.

10. Tyre according to any one of the preceding claims, wherein the surface area of said marking (18) is greater than the surface area of said texture (20).

11. Tyre according to any one of the preceding claims, wherein said marking (18) globally forms an annular surface on said side wall of the tyre.

12. Tyre according to any one of the preceding claims, wherein said texture (20) comprises a plurality of elements protruding and/or hollowed out with respect to a surface of said side wall.

13. Tyre according to Claim 12, wherein said texture (20) is divided into a plurality of patterns that are spaced apart, each pattern comprising a plurality of elements protruding and/or hollowed out, intermediate zones of said side wall without texture separating said patterns.

14. Method for marking a tyre of the type comprising a tread and two side walls delimiting said tread, at least one of the side walls comprising at least one texture made of a piece with said side wall and forming a contrast with the rest of said side wall that is not textured, the method comprising:
- a step of production, by colour printing using at least one print head, of at least one marking that is at least partly coloured on said side wall adjacent to said texture,
- said step of production of said marking being performed after vulcanization of said tyre.

15. Method according to Claim 14, comprising, before the step of production of said marking:
- a step of determination of the position of said texture on said side wall by the measurement of the brightness of said texture and of said rest of said side wall that is not textured, and
- a step of positioning of said print head with respect to said side wall as a function of said determined position of said texture.

16. Method for marking a tyre of the type comprising a tread and two side walls delimiting said tread, the method comprising:
- a step of production, by colour printing using at least one print head, of at least one marking that is at least partly coloured on at least one of the side walls, and
- a step of production of at least one texture on said side wall adjacent to said marking,
- said steps of production of said marking and of said texture being performed after vulcanization of said tyre.

17. Method according to Claim 16, wherein said texture is produced by laser etching.
